**Europäisches Patentamt**

**European Patent Office**

**Office européen des brevets**

(19)

(11) Publication number : **0 359 961 B1**

(12)

# EUROPEAN PATENT SPECIFICATION

(45) Date of publication of patent specification :
21.10.92 Bulletin 92/43

(51) Int. Cl.[5] : **E02B 11/00, E02D 3/10**

(21) Application number : **89114369.5**

(22) Date of filing : **03.08.89**

(54) **Hydrophobic material used for drainage of culvert.**

(30) Priority : **20.08.88 JP 206562/88**

(43) Date of publication of application :
**28.03.90 Bulletin 90/13**

(45) Publication of the grant of the patent :
**21.10.92 Bulletin 92/43**

(84) Designated Contracting States :
**DE FR GB**

(56) References cited :
US-A- 4 690 589
PATENT ABSTRACTS OF JAPAN, vol. 7, no.
254 (M-255)[1399], 11th November 1983; &
JP-A-58 138 819 (KIYOSHI YAMAMOTO)17-
08-1983

(73) Proprietor : **NISSHOKU CORPORATION**
**590-1 Takao**
**Tsuyama City Okayama Prefecture (JP)**

(72) Inventor : **Kambe, Hiroyuki**
**226-7, Tsuyamaguchi**
**Tsuyama-city Okayama-prefecture (JP)**
Inventor : **Shibata, Masashi**
**1422-3, Kuwashimo Kume-cho**
**Kume-gun Okayama-prefecture (JP)**
Inventor : **Sugimoto, Masaichi**
**105, Shimobara Kagamino-cho**
**Tomada-gun Okayama-prefecture (JP)**

(74) Representative : **TER MEER - MÜLLER -**
**STEINMEISTER & PARTNER**
**Mauerkircherstrasse 45**
**W-8000 München 80 (DE)**

## Description

The present invention relates to a hydrophobic material used for the drainage of a culvert comprising a soil-aggregating agent housed in a water-permeable medium, which is capable of keeping the water-penetrating property of a soil to be returned into a culvert-draining groove in the construction work for the drainage of a culvert for a long time.

In the conventional construction work for the drainage of a culvert, a drain pipe, such as an earthen pipe or a perforated plastic pipe, has been placed in a culvert-draining groove dug and then a dug soil has been returned into said culvert-draining groove.

In addition, in order to further improve the draining capacity, also a method, in which a cover material, such as brushwood, chaff and gravel, is spread around a drain pipe to increase water-penetrating gaps in a circumference of the drain pipe, has been adopted.

However, clods in the soil, which have been returned into the culvertdraining groove, are broken down within a short time to become very small soil particles and the resulting soil particles are stuck to the water-penetrating gaps in the soil or water-penetrating gaps of the cover material and additionally water-collecting holes of the drain pipe to stop the drain pipe, or, earth and sand are accumulated in the drain pipe to eliminate the draining effect of the culvert, in many cases.

Thereupon, the present inventors have proposed in Japanese Patent Publication No. Sho 50-23528 and Japanese Patent Publication No. Sho 52-45403 that a surface of clods in a soil, which has been returned into a culvert-draining groove, or a soil existing in the circumference of a culvert is treated with a soil-aggregating agent to prevent the breakage of the clods with the lapse of time, thereby using the soil itself as a filter medium.

The above described method has surely been effective in view of improving the drainage of the culvert and has achieved a tentative success. However, since the above described method is a method in which the clogs dug or the groove portion dug are directly sprayed with an aqueous solution of a soil-aggregating agent to treat the surface of the clogs or the soil existing in the circumference of the culvert is impregnated with the aqueous solution of soil-aggregating agent, various kinds of mechanical apparatus are required in the construction work and about 50 to 60 liters of the aqueous solution of soil-aggregating agent must be sprayed for the aggregating treatment of $1m^3$ of the soil. Furthermore, a long time and many labors are required in the construction work of the culvert.

Besides, in general, the soil in the weak ground zone requiring the construction work of the culvert is wet and thus the marks of aqueous solution sprayed can not be visually confirmed thereby it is difficult to inspect.

[Problems to be Solved by the Invention]

Thereupon, the present inventors have proposed a method, in which at least one side of four sides surrounding a longitudinal direction of a culvert-draining groove is covered with a filter medium obtained by housing a soil-aggregating agent in a water-permeable filter medium or putting said soil-aggregating agent between said water-permeable filter media, in Japanese Patent Publication No. Sho 55-17167 as a result of their various kinds of investigation aiming at the improvement of the above described method.

A piece of cloth, nonwoven fabric, urethane foam, coconut mat and the like has been used as the filter medium used in this method and the soil-aggregating agent is housed in a bag formed by this filter medium or put the soil-aggregating agent between two pieces of filter medium.

And, the construction work has been executed by placing the filter medium, in which the soil-aggregating agent is housed or between which the soil-aggregating agent is put, on at least one side of four sides surrounding the longitudinal direction of the culvert-draining groove to return the soil into the groove.

According to this method, the filter medium, in which the soil-aggregating agent is housed or between which the soil-aggregating agent is put, is merely placed on the culvert-draining groove and no special mechanical apparatus remarkably superior in workability is required. Moreover, since an advantage has occurred in that the marks of the construction work can be visually confirmed by the placed filter medium and thus the inspection is easily achieved, this method has been used in many construction works of culvert.

However, a piece of cloth, nonwoven fabric and urethane foam, which has been used as a filter medium having small water-penetrating gaps, has been suitable as the material for housing the soil-aggregating agent therein or putting the soil-aggregating agent therebetween. However a problem has occurred in that since the water-penetrating gaps are small, when muddy water passes through the water-penetrating gaps, soil particles are gradually accumulated on said filter medium to form a non-water-penetrating layer.

On the contrary, when the coconut mat and a net with large meshes having the large water-penetrating gaps are used as the filter medium, there is not the possibility that the soil particles are accumulated on the filter medium but the problem occurs that they are insufficient for housing the soil-aggregating agent therein or putting the soil-aggregating agent therebetween, so that the soil-aggregating agent is apt to fall off during the construction work.

In addition, it has been confirmed that in the case of the filter medium housing the soil-aggregating agent therein or putting the soil-aggregating agent therebetween, the water-penetrating property is further reduced in the initial period of the construction work due to the highly viscous aqueous solution of soil-aggregating agent until the filter medium hardly exhibits any water-penetrating property.

As above described, both the method, in which the aqueous solution of soil-aggregating agent is directly sprayed, (hereinafter simply referred to as spraying method) and the method, in which the filter medium housing the soil-aggregating agent therein or putting the soil-aggregating agent therebetween is buried, (hereinafter simply referred to as filter method) have advantages and disadvantages at the same time. However, a filter method superior in constructability and capable of confirming the marks of construction work is still attractive. Accordingly, the present inventors have reached the new knowledge that the soil particles accumulating in the small water-penetrating gaps of the filter medium to remarkably reduce the water-penetrating property are silt and clay having diameters of 0.074 mm or less as a result of their hard investigations aiming at the solution of the problem incidental to the filter method, that is, the problem that the water-penetrating property can not be improved, and obtained the new knowledge of the material and construction of the filter medium capable of preventing said silt and clay from accumulating on the filter portion and easily putting the soil-aggregating agent therebetween and thus completed a hydrophobic material used for the drainage of a culvert capable of not only obtaining the effects equivalent to those in the spraying method but also keeping the water-penetrating property for a long time, that is, achieved the present invention.

[Measures for Solving the Problems]

The present invention now provides a hyrophobic material used for the drainage of a culvert comprising a soil-aggregating agent housed in a water-permeable medium, characterized in that said soil-aggregating agent is stuck to close portions of textile goods or knit goods comprising rough portions wherein the warps are arranged at intervals of 5 to 15 mm and close portions wherein the warps are arranged at intervals of 0.1 to 0.3 mm, while the wefts are uniformly arranged at intervals of 5 to 15 mm.

Subclaims 2 and 3 cover preferred embodiments of this hydrophobic material.

The present invention.is described in the following in more detail with reference to the preferred embodiments and the drawings enclosed. In the drawings

**Fig. 1** is a partial surface view showing a rough and close fabric constructing a hydrophobic material used for the drainage of a culvert according to the present invention;

**Fig. 2** is a partial sectional view showing a construction of a hydrophobic material used for the drainage of a culvert according to the present invention; and

**Fig. 3** is a sectional view showing one preferred embodiment of the construction work of a culvert wherein a hydrophobic material used for the drainage of a culvert according to the present invention is used.

In the drawings, reference numeral (1) is a rough and close fabric, (2) is a soil-aggregating agent, (3) is a water soluble film, (4) is a close portion, (5) is a rough portion, (6) is a culvert-draining groove, (7) is a primary soil to be returned, (8) is a secondary soil to be returned, (9) is a drain pipe, and (A) is a hydrophobic material used for the drainage of a culvert according to the present invention.

The present invention is below described in more detail with reference to the preferred embodiments thereof.

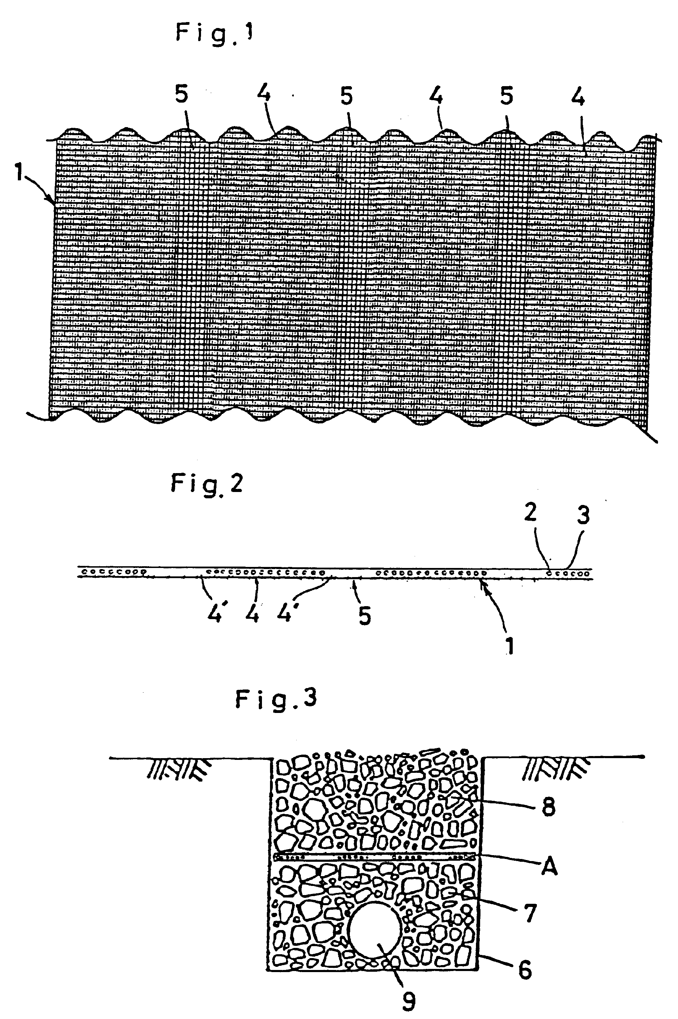

An explanation is given as to the textile goods or knit goods used in the present invention. Materials of raw material yarns are not specially limited but every yarn formed of preferably vegetable, animal and chemical fibers, which are apt to be corroded in the soil, can be used. In general, yarns of 30 to 40 deniers formed of staple fibers are used. For example, in a textile good shown in Fig. 1, warps are used at a ratio of 250 to 300 pieces/10 cm (the warps are arranged at intervals of 0.1 to 0.3 mm) in the close portions while the warps are arranged at intervals of 5 to 15 mm in the rough portions, the rough portions occupying 8 to 20 % of the whole width.

Wefts are uniformly arranged at intervals of 5 to 15 mm. The warps and the wefts are woven to make a mosquito net fabric with the close portions of 5 to 15 cm wide and the rough portions of 1 to 3 cm wide arranged alternately as shown in Fig. 1.

In addition, powdery or granular polyethylene oxide, polyacryl amide, sodium polyacrylate and the like can be used as the soil-aggregating agent singly or in combination.

Besides, a film, which is floated on a stationary water surface and then dissolved or dispersed in water within 2 minutes without stirring, is used as the water soluble film. One example is a polyvinyl alcohol (film of a thickness of 20 to 40 $\mu$m.

First of all, an explanation is given on the construction of the hydrophobic material used for the drainage of a culvert according to the present invention with reference to Fig. 2 which is a partial sectional view. The warps of 30 to 40 deniers formed of staple fibers are used at a ratio of 250 to 300 pieces/10 cm in the close portions while said warps are arranged at intervals of 5 to 15 mm in the rough portions. The wefts are uniformly arranged at intervals of 5 to 15 mm all over the close portions and the rough portions. A small quantity of water is added all over a mosquito net rough and close fabric (1) with the close portions (4) of 5 to 15 cm width and the rough portions (5) of 1 to 3 cm width repeated alternately and said soil-aggregating agent (2), for example powdery or granular polyethylene oxide and the like, is uniformly added and stuck to a central portion of the close portions (4) excepting 1 to 2 cm of both ends (indicated by reference numeral (4') in Fig. 2] of the close portions (4) to obtain the hydrophobic material used for the drainage of a culvert according to the present invention.

Or, a small quantity of water is additionally added on the stuck soil-aggregating agent and a water soluble film (3) represented by a polyvinyl alcohol film is stuck to the soil-aggregating agent (2) by for example rolling so as to cover all over the mosquito net rough and close fabric (1). In the case where the water soluble film (3) is stuck in this manner, in the construction work and the like the soil-aggregating agent (2) can be prevented from falling off from the rough and close fabric (1).

In addition, in both the first preferred embodiment and the second preferred embodiment products with a width of 40 cm to 2 m are produced by the use of machines. The rough portions are slit so as to have a width of for example 20 to 50 cm in accordance with a width of the culvert to be used and provided in the form of roll having a length of about 100 m. In addition, although textile goods were used in said preferred embodiments, knit goods may be used in place of the textile goods.

Next, a further preferred embodiment of the construction work, in which the hydrophobic material used for the drainage of a culvert according to the present invention is used for a culvert, is described with reference to Fig. 3. A drain pipe (9), such as perforated plastic pipe or earthen pipe, is laid in a culvert-draining groove (6) dug and then the dug soil is returned into the groove until a height of 15 to 40 cm from the bottom of the groove (primary returned soil) (7) with or without laying a protective material, such as chaff, gravel and rice straw, and additionally the hydrophobic material (A) used for the drainage of a culvert according to the present invention is laid along the groove so that said water soluble film (3) may be on a lower side. Subsequently, the rest of the dug soil (secondary soil to be returned) (8) is returned on the hydrophobic material used for the drainage of a culvert according to the present invention.

Besides, the hydrophobic material used for the drainage of a culvert according to the present invention can be used also for the bottom portion and side portions of the culvert-draining groove, the circumference of the culvert or the circumference of the drain pipe in addition to said preferred embodiments.

Since the hydrophobic material used for the drainage of a culvert according to the present invention is merely laid in the culvert-draining groove and returns the dug soil in the culvert-draining groove in the same manner as the conventional filter method to finish the construction work, in comparison with the spraying method no specialized machine is required in the construction work, labor being reduced, and the marks of construction work being visually confirmed, thereby the inspection is easily executed.

In addition, if the hydrophobic material used for the drainage of a culvert according to the present invention is laid in the culvert-draining groove, the water

soluble film is speedily dissolved or dispersed by the moisture in the surrounding soil or rain water and also the soil-aggregating agent starts to be dissolved and penetrated at the same time. However, for 0.5 to 1 months from the construction work, the soil-aggregating agent stuck to the close portions of the rough and close fabric is turned into a laminar high-concentration and high-viscosity aqueous solution and the water-penetrating property of the close portions of the rough and close fabric is reduced to an order of $10^{-3}$ cm/sec but the rainwater penetrated into the soil for 0.5 to 1 months after the construction work and water remaining on the surface of the earth can be removed without delay through the rough portions of the rough and close fabric.

In addition, after the lapse of about 1 month from the construction work, the soil-aggregating agent stuck to the close portions of the rough and close fabric is perfectly dissloved to be penetrated into the lower soil thereby not only a water-proof film is formed on the surface of the clods but also the soil is aggregated and as a result, the water-penetrating gaps equivalent to those in the spray method are maintained.

And, since also the intervals of yarns in the close portions of the rough and close fabric are 0.1 to 0.3 mm after the soil-aggregating agent has been dissolved and fallen off, the soil particles having diameters of 0.074 mm or less, which are accumulated in the filter medium to reduce the water-penetrating property, can pass through the meshes of the rough and close fabric. In comparison with the conventional filter medium, there is not the possibility that the water-penetrating gaps are too small, so that the soil particles are accumulated to form the non-water-penetrating layer and on the contrary the water-penetrating gaps are too large, so that the soil-aggregating agent is housed in the filter medium or put between the filter medium merely insufficiently and furthermore the soil-aggregating agent is fallen off during the construction work.

That is to say, the hydrophobic material used for the drainage of a culvert capable of keeping the water-penetrating property for a long time in the same manner as the spraying method and easily putting the soil-aggregating agent therebetween without accumulating the soil particles can be provided. In addition, in the case where the water soluble film is stuck to said soil-aggregating agent so as to cover all over said textile goods or knit goods, the soil-aggregating agent can be prevented from falling off from the rough and close textile goods or knit goods during the construction work and the like.

Besides, in the case where said textile goods or knit goods are formed of corrosible materials, said textile goods or knit goods had been already corroded when the place where the construction work of the culvert has been executed is cultivated by means of a cultivator and the like later or the construction work of another supplementary culvert is executed there, so that there is not the possibility that they are in the way later.

## Claims

1. A hydrophobic material used for the drainage of a culvert comprising a soil-aggregating agent housed in a water-permeable medium, **characterized in that** said soil-aggregating agent (2) is stuck to close portions of textile goods or knit goods (1) comprising rough portions (5) wherein the warps are arranged at intervals of 5 to 15 mm and close portions (4) wherein the warps are arranged at intervals of 0.1 to 0.3 mm, while the wefts are uniformly arranged at intervals of 5 to 15 mm.

2. The hydrophobic material according to claim 1, **characterized in that** a water soluble film (3) is stuck to said soil-aggregating agent so as to cover all over the textile goods or knit goods.

3. The hydrophobic material according to claim 1 or 2, **characterized in that** said textile goods or knit goods are formed of vegetable, animal or chemical fibers, which are apt to be corroded in the soil.

## Patentansprüche

1. Hydrophobes Material zur Verwendung für die Drainage eines Entwasserungskanals, umfassend ein in einem wasserdurchlassigen Medium eingeschlossenes Bodenaggregationsmittel, **dadurch gekennzeichnet,** daß das Bodenaggregationsmittel (2) an engen Abschnitten von Textilwaren oder Strick-warer (1) haftet, welche grobe Abschnitte (5), in denen die Ketten in Abständen von 5 bis 15 mm angeordnet sind, und enge Abschnitte (4), in denen die Ketten in Abständen von 0,1 bis 0,3 mm angeordnet sind, während die Schüsse gleichmäßig in Abständen von 5 bis 15 mm angeordnet sind, umfassen.

2. Hydrophobes Material nach Anspruch 1, **dadurch gekennzeichnet,** daß ein wasserlöslicher Film (3) an dem Bodenaggregationsmittel haftet, so daß die gesamten Textilwaren oder Strickwaren bedeckt werden.

3. Hydrophobes Material nach Anspruch 1 oder 2, **dadurch gekennzeichnet,** daß die Textilwaren oder Strickwaren aus pflanzlichen, tierischen oder chemischen Fasern, die dazu neigen, im Boden zu verrotten, gebildet sind.

## Revendications

1. Matériau hydrophobe, utilisé pour le drainage d'une conduite enterrée et comprenant un agent de consolidation du sol enfermé dans un milieu perméable à l'eau, caractérisé en ce que l'agent de consolidation du sol (2) adhère sur des parties serrées de produits textiles ou de produits tricotés (1) comprenant des parties non serrées (5) dans lesquelles les fils de chaîne sont disposés à des intervalles de 5 à 15 mm, et des parties serrées (4) dans lesquelles les fils de chaîne sont disposés à des intervalles de 0,1 à 0,3 mm, tandis que les fils de trame sont disposés d'une manière uniforme à des intervalles de 5 à 15 mm.

2. Matériau hydrophobe suivant la revendication 1, caractérisé en ce qu'un film soluble dans l'eau (3) est placé de façon à adhérer sur l'agent de consolidation du sol, de manière à recouvrir l'ensemble du produit textile ou produit tricoté.

3. Matériau hydrophobe suivant la revendication 1 ou 2, caractérisé en ce que le produit textile ou produit tricoté est formé de fibres végétales, animales ou chimiques qui sont aptes à être l'objet d'une corrosion dans le sol.

Fig. 1

5  4  5  4  5  4

1

Fig. 2

2  3

4'  4  4'  5

1

Fig. 3

8

A

7

6

9